# EUROPEAN PATENT SPECIFICATION

(11) **EP 2 077 428 B1**
(45) Date of publication and mention of the grant of the patent: **26.12.2018**
(21) Application number: 08253073.4
(22) Date of filing: 18.09.2008
(51) Int. Cl.: F28D 7/16, F28F 13/12, F28F 9/22

(54) **A heat exchanger, a heat exchanger element thereof and a method of assembling a heat exchanger element**
Wärmetauscher, Wärmetauscherelement dafür und Verfahren zur Montage eines Wärmetauscherelements
Échangeur de chaleur, élément d'échangeur de chaleur correspondant et procédé pour assembler l'échangeur de chaleur

(30) Priority: 18.09.2007 GB 0718216
(43) Date of publication of application: 08.07.2009
(73) Proprietor: Vent-Axia Group Limited, Crawley, West Sussex RH10 9YX (GB)
(72) Inventor: Saunders, Alan, Angmering West Sussex BN16 4JZ (GB); Cottingham, Neil, Arundel Sussex BN18 9ES (GB)
(74) Representative: Boden, Keith McMurray

(56) References cited:
- EP-B1- 0 517 701
- WO-A-02/33329
- DE-A1- 3 408 412
- DE-A1-102005 016 913
- DE-A1-102005 035 712
- DE-A1-102005 040 610
- DE-A1-102006 001 724
- JP-A- 10 253 118
- US-A- 1 790 897
- US-A- 4 117 884
- US-A- 4 520 868
- US-A- 4 576 223
- US-A- 4 799 540
- US-A1- 2005 103 483

## Description

The present invention relates to a heat exchanger, a heat exchanger element therefor, and a method of assembling a heat exchanger element, and particularly but not exclusively relates to a heat exchanger and a heat exchanger element for use with an extractor type fan or fans for a building or the like.

It has previously been proposed to provide a heat exchanger for mounting through the wall of a building or the like, the heat exchanger being provided with fans to force warm, damp exhaust air from the building and to force cold, dry, supply air into the building, heat from the two air flows being exchanged so that the incoming supply air is heated as it is forced into the building. Such a heat exchanger is typically used, for example, in bathrooms or kitchens, whilst a reverse flow heat exchanger has been proposed for bedrooms, for example. Such a heat exchanger is known, for example, from EP-B-0517701.

It is desirable to be able to improve the energy efficiency of such a heat exchanger. It is also desirable to be able to reduce the speed, complexity and cost of assembling the heat exchanger and the speed, complexity and cost of installing the heat exchanger on the building or the like.

According to the invention there is provided a heat exchanger according to claim 1.

The duct is thus mounted on the heat exchanger without any permanent fixings such as welding, adhesive, nuts and bolts or the like.

Preferably the or each duct is mounted on and between a pair of spaced apart end plates, the end plates comprising part of the heat exchanger.

Preferably the end plates are made from a resiliently deformable material that deforms around the or each duct to engage the or each duct so as to retain the or each duct on the end plates.

Alternatively, the end plate may comprise a disc of resiliently deformable material formed with at least one aperture through which a duct is inserted.

Preferably fluid directing means are mounted on the heat exchanger to direct fluid from the first impeller toward the or each duct.

Preferably the motor comprises an output shaft operative to drive the first impeller to force the supply fluid in a first direction through the heat exchanger, the motor output shaft being further operative to drive the second impeller to force the exhaust fluid through the heat exchanger in a different direction to that of the supply fluid.

Preferably one of the impellers comprises an axial impeller operative to force fluid across the impeller in a direction substantially parallel to the motor output shaft.

Preferably one of the impellers comprises a radial impeller operative to force fluid across the impeller in a direction substantially perpendicular to the motor output shaft.

Preferably the first and second impellers are fixedly mounted together so as to rotate together at the same rotational speed.

Preferably the first and second impellers are integrally formed together.

Preferably the grille expands to a diameter greater than that of the heat exchanger outer casing, when the heat exchanger has been fully inserted.

Preferably the grille is formed with an axial fluid outlet operative to emit fluid in a direction substantially parallel with the longitudinal axis of the heat exchanger and a radial fluid inlet operative to receive fluid in a direction substantially perpendicular to the longitudinal axis of the heat exchanger.

The present invention may be carried into practice in various ways, but embodiments will now be described by way of example only with reference to the accompanying drawings in which:
**Figure 1** is a perspective exploded view of a heat exchanger and heat exchanger element in accordance with the present invention;
**Figure 2** is perspective exploded view of part of the casing of the heat exchanger of Figure 1;
**Figure 3** is a sectional side view of the heat exchanger and heat exchanger element of Figures 1 and 2;
**Figure 4** is an exploded perspective view of a modified heat exchanger and heat exchanger element in accordance with the present invention;
**Figure 5** is an exploded perspective view of the modified heat exchanger and heat exchanger element of Figure 4; and
**Figure 6** is schematic view of a method of assembling a heat exchanger element in accordance with the present invention.

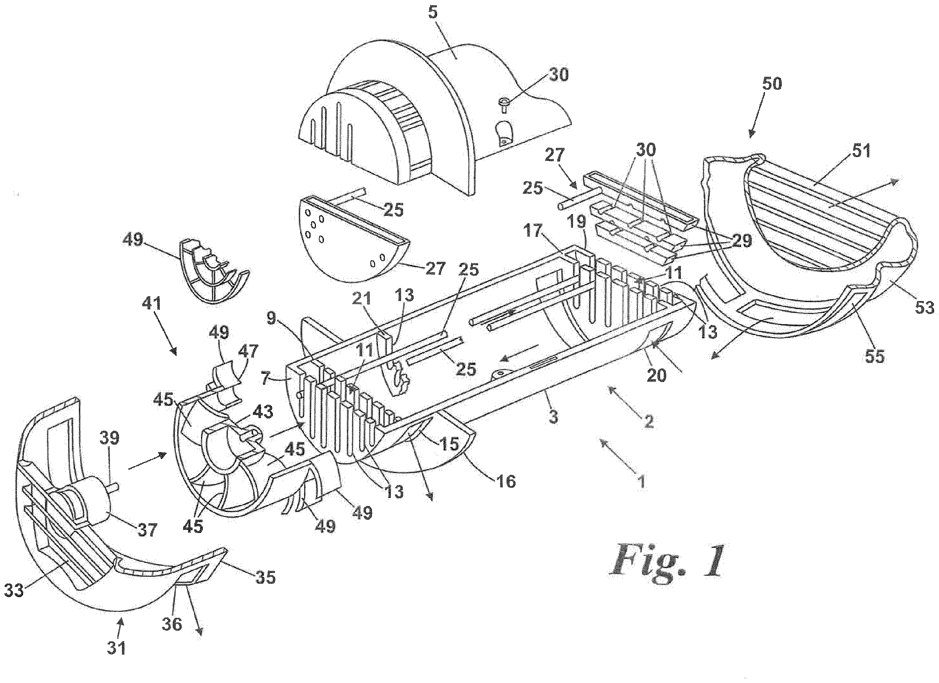

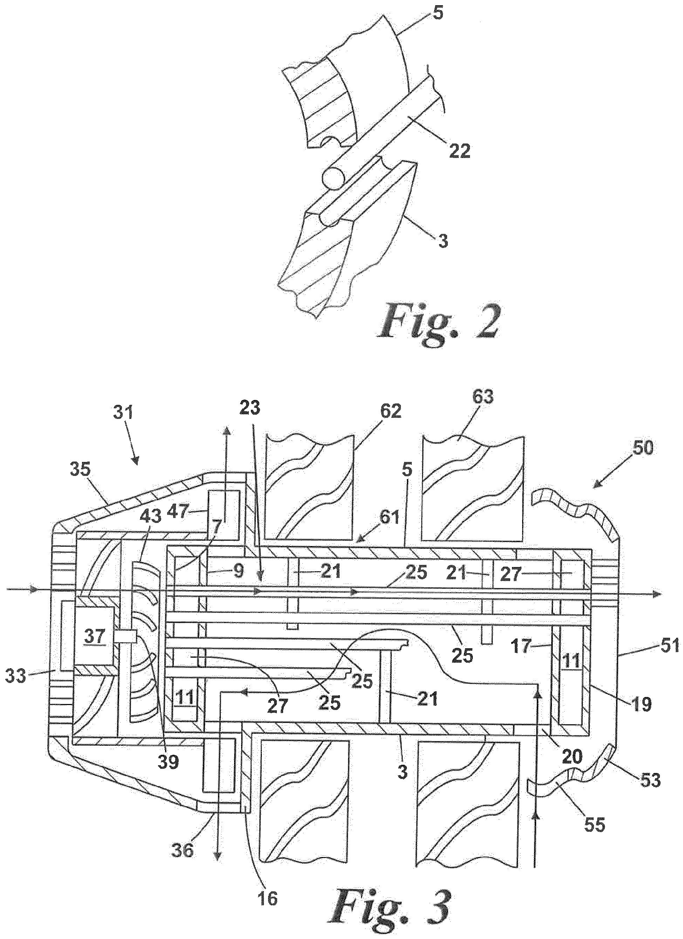

Referring initially to Figures 1 to 3, a heat exchanger 1 comprises a tubular outer casing 2 formed from two casing halves 3, 5. One end of the casing 2 is formed with a pair of spaced apart end walls 7, 9, which between them define a slot 11 that extends transversely across the casing 2. The walls 7, 9 are formed with a plurality of vertically orientated, elongate cut-outs 13 that are relatively spaced apart transversely across the end walls 7, 9.

A supply air outlet aperture 15 is formed in the casing 2 between the wall 9 and a flange 16 that extends radially outwardly from the exterior of the casing 2 adjacent the outlet aperture 15.

The other end of the casing 2 is formed with a pair of spaced apart end walls 17, 19 of identical structure to end walls 7, 9. A supply air inlet aperture 20 is formed in the casing 2 adjacent the wall 17.

A plurality of reinforcing walls 21 are spaced along the casing 2 between the end walls 9 and 17. The reinforcing walls 21 are also formed with a plurality of vertically orientated, elongate, transversely spaced apart cut-outs 13.

The two casing halves 3, 5 can be sealingly secured together using any suitable means including at least one of adhesive, screws, bolts, clips or welding. The casing halves 3, 5 may be hinged together. An elongate flexible circular seal 22 is mounted in a semi-circular groove formed in each casing half 3, 5 to form an airtight seal between the casing halves 3, 5 when the two halves 3, 5 are secured together. The casing halves 3, 5 may additionally or alternatively be glued together.

A heat exchanger element 23 is mounted within the casing 2. The heat exchanger element 23 comprises a plurality of ducts in the form of thin walled tubes 25 preferably formed from a plastics or metal material. The tubes 25 are mounted in and between a pair of spaced apart end plates 27, each end plate 27 being formed from a plurality of sealing strips 29 that are stacked on top of one another. The sealing strips 29 are, in this example, formed with semicircular recesses 30 that are dimensioned to receive the tubes 25 so as to hold the tubes 25 parallel to and transversely spaced apart from one another. Any other suitable spacing means may be provided to hold the tubes 25 parallel to and transversely spaced apart from one another.

A plurality, for example six or seven, baffles may be spaced along the heat exchanger element 23 in order to optimise the air flow through the heat exchanger element 23 in use so as to make the heat transfer as efficient as possible.

The heat exchanger element 23 is mounted on the casing 2 by inserting the end plates 27 into the respective slots 11 formed between the end walls 7, 9, 17, 19. The end plates 27 are received in the slots 11 with a push fit. The tubes 25 project from each end plate 27, and extend through respective cut-outs 13 in the end walls 7, 9, 17, 19 and the reinforcing walls 21. When the casing halves 3, 5 are sealed together, the casing halves 3, 5 clamp down onto the end plates 27 to compress the material of each end plate 27 onto the tubes 25. This engagement forms an airtight seal between the tubes 25 and the end plates 27. In this example the casing halves 3, 5 are clamped together using screws 30.

The heat exchanger 1 further comprises a motor housing 31 that fits onto the first end of the casing 2. The motor housing 31 comprises an exhaust air inlet grille 33 which leads to a tubular portion 35 formed with a supply air outlet aperture 36 that is axially spaced from the grille 33.

A motor 37 is mounted in the centre of the grille 33 and comprises a single output shaft 39 on which is mounted impeller means 41.

The impeller means 41 comprises a first, axial, impeller 43 with a plurality of blades 45 arranged to force air across the first impeller 43 in a direction parallel to the motor shaft 39. The impeller means 43 further comprises a second, radial impeller 47 with a plurality of blades 49 arranged to force air radially outwardly from the motor shaft 39. Both impellers 43, 47 are driven from the single output shaft 39 of the motor 37. In this example the two impellers 43, 47 are fixedly mounted together. The two impellers 43, 47 may be formed integrally as a single component.

Air directing means in the form of an air flow vane 49 is mounted between the first impeller 43 and the end wall 7 of the casing 2 to direct air pumped by the first impeller 43 towards the open ends of the tubes 25.

When mounted on the casing 2, the tubular portion 35 of the motor housing 31 slidingly receives the end of the casing 2 such that the end of the tubular portion 35 abuts the flange 16 on the casing 2. When in this position the outlet aperture 36 on the motor housing 31 is aligned with the outlet aperture 15 on the casing 2 and with the blades 49 of the second impeller 47. The blades 45 of the first impeller 43 are aligned with the end wall 7 of the casing 2 and thus generally with the ends of the tubes 25 of the heat exchanger element 23.

The other end of the casing 2 is provided with an end cap 50 comprising an exterior grille that functions as an exhaust air outlet, and a tubular portion 53 leading from the grille formed with a supply air inlet aperture 55. The end cap 50 is mounted on the casing 2 such that the end of the casing 2 is received within the tubular portion 53 with the inlet aperture 55 aligned with the inlet aperture 20 formed in the casing 2. The grille is aligned with the ends of the tubes 25.

The end cap 50 is made from a resiliently deformable material such as a flexible polymer that can be compressed and then expand back to its original size.

The fully assembled heat exchanger 1, that is with the heat exchanger element 23, motor housing 31 and end cap 50 all mounted on the casing 2, is installed in a building or the like by inserting the end cap 50 through a suitable bore 61 formed in the walls 62, 63 of the building. As it is inserted, the end cap 50 is compressed so as to fit through the bore 61, the heat exchanger 1 being inserted into the bore 61 until the flange 16 of the casing 2 abuts the inner wall 62 of the building. When so inserted, the flexible end cap 50 extends from the bore 61. When not constrained by the bore 61, the end cap 50 expands to its original size such that the tubular portion 53 forms a weather tight seal around the bore 61 on the exterior wall of the building.

In use of the heat exchanger 1, warm, moist exhaust air from, in this example, the inside of the building, is pumped by the first impeller 43 axially through the inlet grille 33 of the motor housing 31, is directed by the air flow vane 49 into the tubes 25 of the heat exchanger element 23. The exhaust air is forced by the first impeller 43 along the tubes 25, the exhaust air exiting the heat exchanger 1 through the exhaust outlet grille in the end cap 50. The exhaust air is thus forced through the heat exchanger 1 in an axial direction, that is a direction aligned with the longitudinal axis of the heat exchanger 1.

Simultaneously cold, dry supply air is drawn through the heat exchanger 1 by the second impeller 47. The supply air is drawn radially through the inlet apertures 55, 20 in the end cap 50 and the casing 2 and into the cavity within the casing 2. The supply air is drawn along the inside of the casing 2 and then radially out of the cavity through the outlet aperture 15 in the casing 2 and out, via the blades 49 of the second impeller 47, through the outlet aperture 36 in the motor housing 31 and into the building.

As the supply air flows through the inside of the casing 2 around the tubes 25, heat is exchanged between the exhaust air being forced through the tubes 25 and into the supply air that is being forced in the opposite direction through the casing 2.

The above described heat exchanger element 23 is relatively quick, simple and cheap to assemble because all of the major components simply press together without the need for any permanent or additional fixings. Only a single motor is required which reduces the component cost of the heat exchanger 1 and reduces the energy consumption in use.

The heat exchanger 1 is also relatively quick, simple and cheap to assemble because the primary modular components, ie casing 2 and heat exchanger element 23, motor housing 31 and end cap 50 are pre assembled and can be joined together without any additional fixings.

Installation of the assembled heat exchanger 1 into a building is also relatively quick, simple and cheap because the heat exchanger 1 can be installed when fully assembled simply by pushing the heat exchanger 1 through a bore formed in the walls of the building or the like. No other mountings or fixings are required, and the installer does not have to undertake any installation work outside of the building or the like.

It will be appreciated that the above described heat exchanger 1 could be used in any desired situation, its use not being limited only to buildings, or to installation in cavity walls. Furthermore, the air flows described above are exemplary and alternative air flows are envisaged including the exhaust air being pumped by the radial impeller and the supply air being pumped axially through the ducts by the first impeller. The heat exchanger may be used with a fluid other than air.

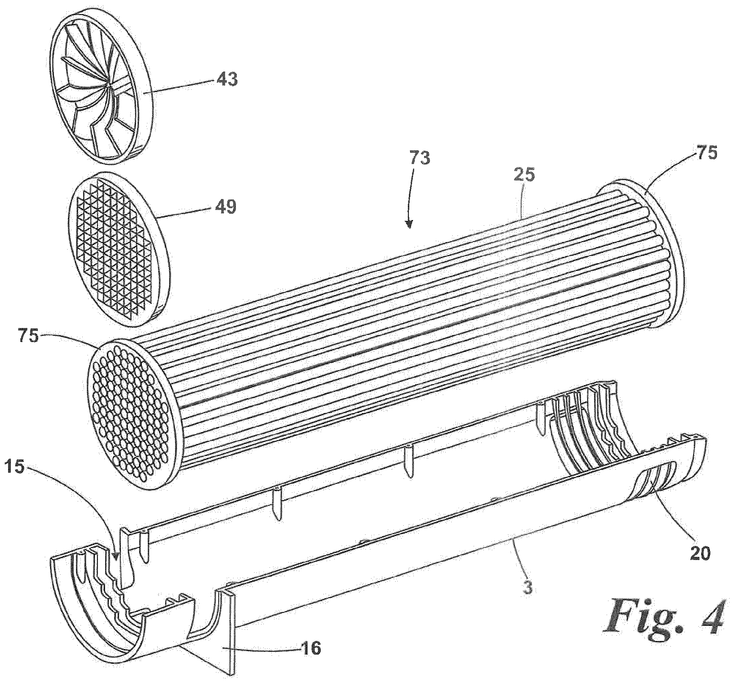

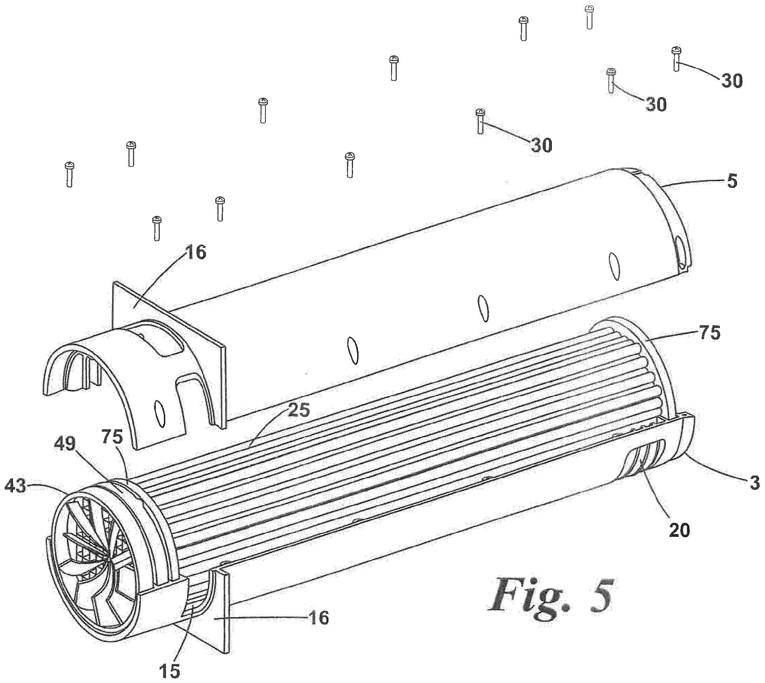

Referring additionally to Figures 4 and 5, a modified heat exchanger element 73 is provided wherein the tubes 25 are fitted into modified end plates 75 that comprise discs of a resiliently deformable material such as rubber or foam, the end plates 75 being preformed with bores dimensioned to receive the tubes 25 with a push fit. The modified end plates 75 are then received in the slots 11 defined between the end walls 7, 9, 17, 19 as described above. The air flow vane 49 in this example is mounted with a push fit over one of the modified end plates 75.

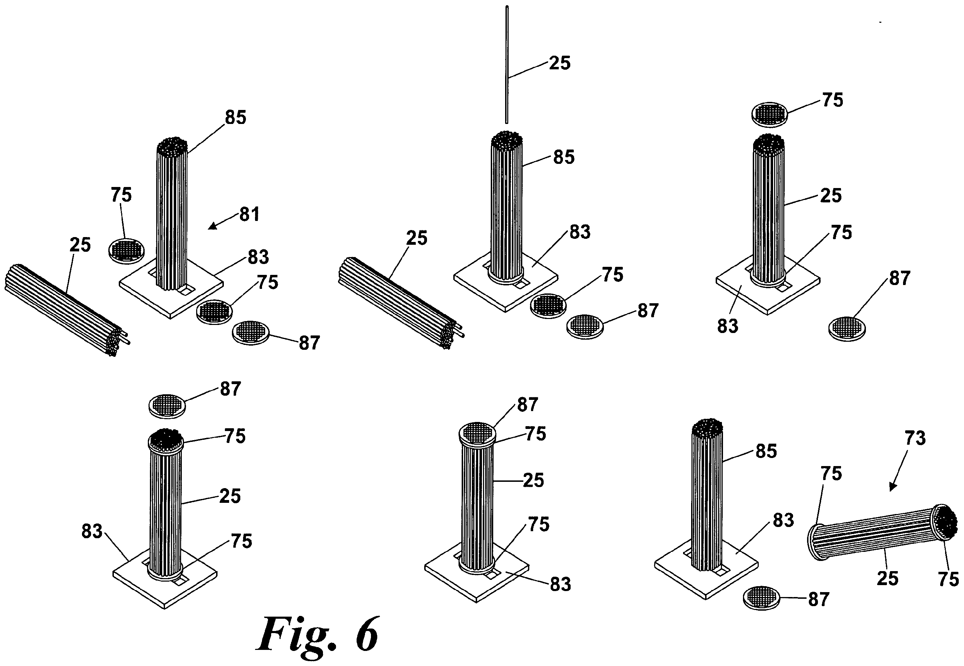

Referring additionally to Figure 6 the heat exchanger element 23 is assembled as follows:
A fixture 81 is provided comprising a base plate 83 on which are mounted a plurality of elongate, upstanding duct guide members 85.

A first end plate 75 is then slid onto and along the guide members 85 so as to be adjacent the tool fixture 81.

The tubes 25 themselves are then slid along respective guide members 85 and the lower ends of the tubes 25 are received in respective apertures formed in the end plate 75.

The second end plate 75 is then slid onto the tubes 25 so as to be adjacent the upper ends of the tubes 25.

A length setting plate 87 is then slid onto the upper ends of the tubes 25 so as to be adjacent the second end plate 75.

The assembled heat exchanger element 23 is then removed from the fixture 81 and the length setting plate 87 is discarded.

## Claims

1. A heat exchanger, comprising:
a heat exchanger element (23; 73) past which, in use, supply fluid and exhaust fluid is forced;
a tubular outer casing (2) for installing in a building or the like by inserting the casing (2) into a mounting bore (61) formed in a wall (62, 63) of the building or the like, the heat exchanger element (23; 73) being mounted within the casing (2) and comprising a plurality of heat exchanger ducts (25) sealingly mounted on the casing (2) using only the engagement of the material of the ducts (25) with the material of the casing (2), such that the supply fluid and exhaust fluid do not mix, the ducts (25) being spaced apart from one another such that there are gaps between adjacent ducts (25), the ducts (25) extending along the longitudinal axis of the casing (2);
an exhaust air outlet (51) and a supply air inlet (20) provided at one end of the casing (2);
an exhaust air inlet (33) and a supply air outlet (15) provided at the other end of the casing (2); and
fan means comprising a first impeller (43) to force the supply fluid through the heat exchanger (1) between the supply air inlet (20) and the supply air outlet (15) in a first direction aligned with the longitudinal axis of the heat exchanger (1) and a second impeller (47) to force the exhaust fluid through the heat exchanger (1) between the exhaust air inlet (33) and the exhaust air outlet (51) in an opposite direction to that of the supply fluid, the opposite direction being aligned with the longitudinal axis of the heat exchanger (1), such that one of the supply fluid or exhaust fluid is forced through the ducts (25), with the other of the supply fluid or exhaust fluid being forced around the ducts (25) within the casing (2);
**characterized by**:
an exterior grille through which, in use, fluid is forced, the grille being formed from a resiliently deformable material that deforms sufficiently, in use, for the heat exchanger (1) to be installed in the building or the like by inserting the grille first through the mounting bore (61) formed in the wall (62, 63) of the building or the like, the grille expanding to cover the mounting bore (61) when the heat exchanger (1) has been fully inserted.

2. The heat exchanger of claim 1, further comprising:
a pair of spaced apart end plates (27; 75) on and between which the ducts (25) are mounted.

3. The heat exchanger of claim 2, wherein the end plates (27; 75) are made from a resiliently deformable material that deforms around the ducts (25) to engage the ducts (25) so as to retain the ducts (25) on the end plates (27; 75).

4. The heat exchanger of claim 3, wherein each end plate (27; 75) comprises a disc of resiliently deformable material formed with apertures through which the ducts (25) are inserted.

5. The heat exchanger of any of claims 1 to 4, further comprising:
fluid directing means (49) to direct fluid from the first impeller (43) toward the ducts (25).

6. The heat exchanger of any of claims 1 to 5, further comprising:
a motor (37) comprising an output shaft (39) to drive the first impeller (43) to force the supply fluid in a first direction through the heat exchanger (1), and drive the second impeller (47) to force the exhaust fluid through the heat exchanger (1) in a different direction to that of the supply fluid.

7. The heat exchanger of claim 6, wherein one of the impellers (43, 47) comprises an axial impeller operative to force fluid across the impeller (43) in a direction substantially parallel to the output shaft (39).

8. The heat exchanger of claim 6 or 7, wherein one of the impellers (43, 47) comprises a radial impeller operative to force fluid across the impeller (47) in a direction substantially perpendicular to the output shaft (39).

9. The heat exchanger of any of claims 1 to 8, wherein the first and second impellers (43, 47) are fixedly mounted together so as to rotate together at the same rotational speed.

10. The heat exchanger of any of claims 1 to 9, wherein the first and second impellers (43, 47) are integrally formed together.

11. The heat exchanger of any of claims 1 to 10, wherein the grille expands to a diameter greater than that of the casing (2), when the heat exchanger (1) has been fully inserted.

12. The heat exchanger of any of claims 1 to 11, wherein the grille is formed with an axial fluid outlet operative to emit fluid in a direction substantially parallel with a longitudinal axis of the heat exchanger (1) and a radial fluid inlet (55) operative to receive fluid in a direction substantially perpendicular to the longitudinal axis of the heat exchanger (1).

## Patentansprüche

1. Wärmetauscher, welcher umfasst:
ein Wärmetauscher-Element (23; 73) durch den, bei Verwendung, zugeführtes und abgeführtes Fluid gepresst wird;
ein röhrenförmiges äußeres Gehäuse (2) zur Installation in einem Gebäude oder dergleichen durch Insertion des Gehäuses (2) in ein in einer Wand (62, 63) des Gebäudes oder dergleichen ausgebildetes Befestigungsloch (61), worin das Wärmetauscher-Element (23; 73) in dem Gehäuse (2) befestigt ist und mehrere Wärmetauscher-Leitungen (25) umfasst, die unter Verwendung von lediglich Eingriff des Materials der Leitungen (25) mit dem Material des Gehäuses (2) abgedichtet an dem Gehäuse (2) befestigt sind, so dass das zugeführte Fluid und das abgeführte Fluid sich nicht vermischen, worin die Leitungen (25) voneinander beabstandet sind, so dass zwischen benachbarten Leitungen (25) Lücken sind, worin sich die Leitungen (25) entlang der Längsachse des Gehäuses (2) erstrecken;
einen Abluft-Auslaß (51) und einen Zuluft-Einlaß (20), die an einem Ende des Gehäuses (2) vorgesehen sind;
einen Abluft-Einlaß (33) und einen Zuluft-Auslaß (15), die an einem anderen Ende des Gehäuses (2) vorgesehen sind; und
Belüftungsmittel, die einen ersten Impeller (43) umfassen, um das zugeführte Fluid durch den Wärmetauscher (1) zwischen dem Zuluft-Einlaß (20) und dem Zuluft-Auslaß (15) in einer ersten, mit der Längsachse des Wärmetauscher (1) ausgerichteten Richtung zu bewegen, und einen zweiten Impeller (47), um das abgeführte Fluid durch den Wärmetauscher (1) zwischen dem Abluft-Einlaß (33) und dem Abluft-Auslaß (51) in einer zu dem zugeführte Fluid entgegengesetzten Richtung zu bewegen, wobei die entgegengesetzte Richtung mit der Längsachse des Wärmetauschers (1) ausgerichtet ist, so dass das zugeführte Fluids oder das abgeführte Fluid durch die Leitungen (25) geführt wird, wobei das andere des zugeführten Fluids oder abgeführten Fluids um die Leitungen (25) herum in dem Gehäuse (2) geführt wird;
**gekennzeichnet durch**:
ein äußeres Gitter, durch das, bei Verwendung, Fluid geführt wird, worin das Gitter aus einem federnd verformbaren Material gebildet ist, das sich bei Verwendung ausreichend verformt, so dass der Wärmetauscher (1) in dem Gebäude oder dergleichen zuerst durch Insertieren des Gitters durch das in der Wand (62, 63) des Gebäudes oder dergleichen ausgebildete Befestigungsloch (61) installiert werden kann, worin sich das Gitter erstreckt, um das Befestigungsloch (61) zu bedecken, wenn der Wärmetauscher (1) voll insertiert ist.

2. Wärmetauscher nach Anspruch 1, welcher weiter umfasst:
ein Paar beabstandeter Endplatten (27; 75) auf und zwischen denen die Leitungen (25) befestigt sind.

3. Wärmetauscher nach Anspruch 2, worin die Endplatten (27; 75) aus einem federnd verformbaren Material gebildet sind, das sich unter Eingriff mit den Leitungen (25) um die Leitungen (25) herum verformt, um die Leitungen (25) an den Endplatten (27; 75) zu halten.

4. Wärmetauscher nach Anspruch 3, worin jede End-Platte (27; 75) eine Scheibe aus federnd verformbarem Material mit Öffnungen umfasst, durch die die Leitungen (25) insertiert werden.

5. Wärmetauscher nach einem der Ansprüche 1 bis 4, welcher weiter umfasst:
Fluid-Leitungsmittel (49), um Fluid von dem ersten Impeller (43) zu den Leitungen (25) zu führen.

6. Wärmetauscher nach einem der Ansprüche 1 bis 5, welcher weiter umfasst:
einen Motor (37), der eine Ausgabe-Welle (39) umfasst, um den ersten Impeller (43) anzutreiben, um das zugeführte Fluid in eine erste Richtung durch den Wärmetauscher (1) zu bringen, und um den zweiten Impeller (47) anzutreiben, um das abgeführte Fluid durch den Wärmetauscher (1) in einer zu der Richtung des zugeführten Fluids verschiedenen Richtung zu bringen.

7. Wärmetauscher nach Anspruch 6, worin jeder der Impeller (43, 47) einen axialen Impeller umfasst, der betriebsbereit ist, das Fluid über den Impeller (43) in eine Richtung im Wesentlichen parallel zu der Ausgabewelle (39) zu bringen.

8. Wärmetauscher nach Anspruch 6 oder 7, worin einer der Impeller (43, 47) einen radialen Impeller umfasst, der betriebsbereit ist, Fluid über den Impeller (47) in eine Richtung im Wesentlichen senkrecht zu der Ausgabewelle (39) zu bringen.

9. Wärmetauscher nach einem der Ansprüche 1 bis 8, worin der erste und zweite Impeller (43, 47) fest miteinander befestigt sind, um in der gleichen Drehgeschwindigkeit zusammen zu drehen.

10. Wärmetauscher nach einem der Ansprüche 1 bis 9, worin der erste und zweite Impeller (43, 47) einstückig miteinander ausgebildet sind.

11. Wärmetauscher nach einem der Ansprüche 1 bis 10, worin sich das Gitter zu einem Durchmesser erstreckt, der größer ist als der des Gehäuses (2), wenn der Wärmetauscher (1) voll insertiert ist.

12. Wärmetauscher nach einem der Ansprüche 1 bis 11, worin das Gitter mit einem axialen Fluid-Auslaß ausgebildet ist, der betriebsbereit ist, Fluid in eine Richtung im Wesentlichen parallel zu einer Längsachse des Wärmetauscher (1) auszugeben, und mit einem radialen Fluid-Einlaß (55) ausgebildet ist, der betriebsbereit ist, Fluid aus einer Richtung im Wesentlichen senkrecht zu der Längsachse des Wärmetauschers (1) zu erhalten.

## Revendications

1. Échangeur de chaleur, comprenant :
un élément d'échangeur de chaleur (23 ; 73) au-delà duquel, en utilisation, un fluide d'alimentation et un fluide d'échappement sont forcés ;
un caisson externe tubulaire (2) à installer dans un bâtiment ou analogue par introduction du caisson (2) dans un alésage de montage (61) formé dans une paroi (62, 63) du bâtiment ou analogue, l'élément d'échangeur de chaleur (23 ; 73) étant monté à l'intérieur du caisson (2) et comprenant une pluralité de conduits d'échangeur de chaleur (25) montés de manière étanche sur le caisson (2) en utilisant uniquement l'engagement du matériau des conduits (25) avec le matériau du caisson (2), de telle sorte que le fluide d'alimentation et le fluide d'échappement ne se mélangent pas, les conduits (25) étant espacés les uns des autres de telle sorte qu'il y a des intervalles entre des conduits adjacents (25), les conduits (25) s'étendant le long de l'axe longitudinal du caisson (2) ;
une sortie d'air d'échappement (51) et une entrée d'air d'alimentation (20) prévues à une extrémité du caisson (2) ;
une entrée d'air d'échappement (33) et une sortie d'air d'alimentation (15) prévues à l'autre extrémité du caisson (2) ; et
des moyens de ventilation comprenant une première roue (43) pour forcer le fluide d'alimentation à travers l'échangeur de chaleur (1) entre l'entrée d'air d'alimentation (20) et la sortie d'air d'alimentation (15) dans une première direction alignée avec l'axe longitudinal de l'échangeur de chaleur (1), et une seconde roue (47) pour forcer le fluide d'échappement à travers l'échangeur de chaleur (1) entre l'entrée d'air d'échappement (33) et la sortie d'air d'échappement (51) dans une direction opposée à celle du fluide d'alimentation, la direction opposée étant alignée avec l'axe longitudinal de l'échangeur de chaleur (1), de telle sorte que l'un du fluide d'alimentation et du fluide d'échappement est forcé à travers les conduits (25), l'autre du fluide alimentation et du fluide échappement étant forcé autour des conduits (25) à l'intérieur du caisson (2) ;
**caractérisé par** :
une grille extérieure à travers laquelle, en utilisation, du fluide est forcé, la grille étant formée à partir d'un matériau élastiquement déformable qui se déforme suffisamment, en utilisation, pour permettre à l'échangeur de chaleur (1) d'être installé dans le bâtiment ou analogue par introduction de la grille d'abord à travers l'alésage de montage (61) formé dans la paroi (62, 63) du bâtiment ou analogue, la grille s'élargissant pour couvrir l'alésage de montage (61) lorsque l'échangeur de chaleur (1) a été entièrement introduit.

2. Échangeur de chaleur selon la revendication 1, comprenant en outre :
une paire de plaques d'extrémité espacées (27 ; 75) sur et entre lesquelles les conduits (25) sont montés.

3. Échangeur de chaleur selon la revendication 2, dans lequel les plaques d'extrémité (27 ; 75) sont faites d'un matériau élastiquement déformable qui se déforme autour des conduits (25) pour engager les conduits (25) de façon à retenir les conduits (25) sur les plaques d'extrémité (27 ; 75) .

4. Échangeur de chaleur selon la revendication 3, dans lequel chaque plaque d'extrémité (27 ; 75) comprend un disque de matériau élastiquement déformable formé avec des ouvertures à travers lesquelles les conduits (25) sont introduits.

5. Échangeur de chaleur selon l'une quelconque des revendications 1 à 4, comprenant en outre :
des moyens de direction de fluide (49) pour diriger du fluide à partir de la première roue (43) vers les conduits (25) .

6. Échangeur de chaleur selon l'une quelconque des revendications 1 à 5, comprenant en outre :
un moteur (37) comprenant un arbre de sortie (39) pour entraîner la première roue (43) pour forcer le fluide d'alimentation dans une première direction à travers l'échangeur de chaleur (1), et entraîner la seconde roue (47) pour forcer le fluide d'échappement à travers l'échangeur de chaleur (1) dans une direction différente de celle du fluide d'alimentation.

7. Échangeur de chaleur selon la revendication 6, dans lequel l'une des roues (43, 47) comprend une roue axiale apte à forcer du fluide à travers la roue (43) dans une direction sensiblement parallèle à l'arbre de sortie (39).

8. Échangeur de chaleur selon la revendication 6 ou 7, dans lequel l'une des roues (43, 47) comprend une roue radiale apte à forcer du fluide à travers la roue (47) dans une direction sensiblement perpendiculaire à l'arbre de sortie (39).

9. Échangeur de chaleur selon l'une quelconque des revendications 1 à 8, dans lequel les première et seconde roues (43, 47) sont solidement montées ensemble de façon à tourner ensemble à la même vitesse de rotation.

10. Échangeur de chaleur selon l'une quelconque des revendications 1 à 9, dans lequel les première et seconde roues (43, 47) sont formées ensemble d'un seul tenant.

11. Échangeur de chaleur selon l'une quelconque des revendications 1 à 10, dans lequel la grille s'élargit à un diamètre supérieur à celui du caisson (2), lorsque l'échangeur de chaleur (1) a été entièrement introduit.

12. Échangeur de chaleur selon l'une quelconque des revendications 1 à 11, dans lequel la grille est formée avec une sortie de fluide axiale apte à émettre du fluide dans une direction sensiblement parallèle à un axe longitudinal de l'échangeur de chaleur (1), et une entrée de fluide radiale (55) apte à recevoir du fluide dans une direction sensiblement perpendiculaire à l'axe longitudinal de l'échangeur de chaleur (1).
